# EUROPEAN PATENT APPLICATION

(11) **EP 4 674 535 A1**
(43) Date of publication of application: **07.01.2026**
(21) Application number: 25185900.5
(22) Date of filing: 27.06.2025
(51) Int. Cl.: B05B 1/16, B05B 1/18, B05B 1/30

(54) **PRESSURE ACTIVATED DIVERTER**

(30) Priority: 03.07.2024 US 202463667193 P; 25.06.2025 US 202519248724
(71) Applicant: Kohler Mira Limited, Cheltenham, Gloucestershire GL52 5EP (GB)
(72) Inventor: LEA, Ben, Cheltenham, GL52 5EP (GB); PLACENCIA, Adolfo, Cheltenham, GL52 5EP (GB); JONES, Oliver, Cheltenham, GL52 5EP (GB); WESTGATE, Simon, Cheltenham, GL52 5EP (GB)
(74) Representative: Barker Brettell LLP

(57) **Abstract**

Diverters may be useful in directing and controlling water flow in a showerhead. Diverters may be configured and designed in many ways as discussed herein. As one example, a showerhead may incorporate a diverter. The diverter may incorporate an inlet for receiving water, a flow regulator for maintaining a flow of the water at a set flow rate, a piston connected to a rotatable plate comprising a plurality of ports, and a piston activator. When a pressure of the water flowing through the diverter reaches a certain level, the piston activator may cause the piston to extend, which may cause the rotatable plate to rotate and open at least one of the plurality of ports.

## Description

### Cross-Reference to Related Applications

The present application claims priority to U.S. Provisional Patent Application No. 63/667,193, filed July 3, 2024, and U.S. Patent Application No. 19/248,724, filed June 25, 2025, the entire contents of which are hereby incorporated by reference.

### Background

Diverters are useful in shower systems to provide water with unique and desirable characteristics to a user. Such diverters can adjust which outlets are used, alter which inlets are open (which may adjust the temperature or pressure of water directed to a user), and allow for personalization by a user. As one example, a shower system can incorporate a diverter to alter the direction that water exits a showerhead.

### Brief Description of Drawings

Fig. 1 is a top view of an example diverter.
Fig. 2 is a cross-sectional view of an example diverter.
Fig. 3 is a top view of an example diverter.
Fig. 4 is a perspective view of an example diverter.
Fig. 5 is a cross-sectional view of an example diverter.
Fig. 6 is a top view of an example diverter.
Fig. 7 is a cross-sectional view of an example diverter.
Fig. 8 is a cross-sectional view of an example diverter.
Fig. 9 is a cross-sectional view of an example diverter.
Fig. 10 is a cross-sectional view of an example diverter.
Fig. 11 is a cross-sectional view of an example diverter.
Fig. 12 is a cross-sectional view of an example diverter.
Fig. 13 is a cross-sectional view of an example diverter.
Fig. 14 is a perspective view of an example diverter.

While the disclosure is susceptible to various modifications and alternative forms, a specific embodiment thereof is shown by way of example in the drawings and will herein be described in detail. It should be understood, however, that the drawings and detailed description presented herein are not intended to limit the disclosure to the particular embodiment disclosed, but to the contrary, the intention is to cover all modifications, equivalents, and alternatives falling within the spirit and scope of the present disclosure as defined by the appended claims.

### Detailed Description

The invention will now be described with reference to the drawing figures, in which like reference numerals refer to like parts throughout. For purposes of clarity in illustrating the characteristics of the present invention, proportional relationships of the elements have not necessarily been maintained in the drawing figures.

As set forth herein, a diverter may cause different fluid (e.g., water) paths to open and/or close based on a water pressure passing into the diverter. Such alteration of the water paths, based on the adjustment of the diverter, may allow for a shower system to have varying spray modes.

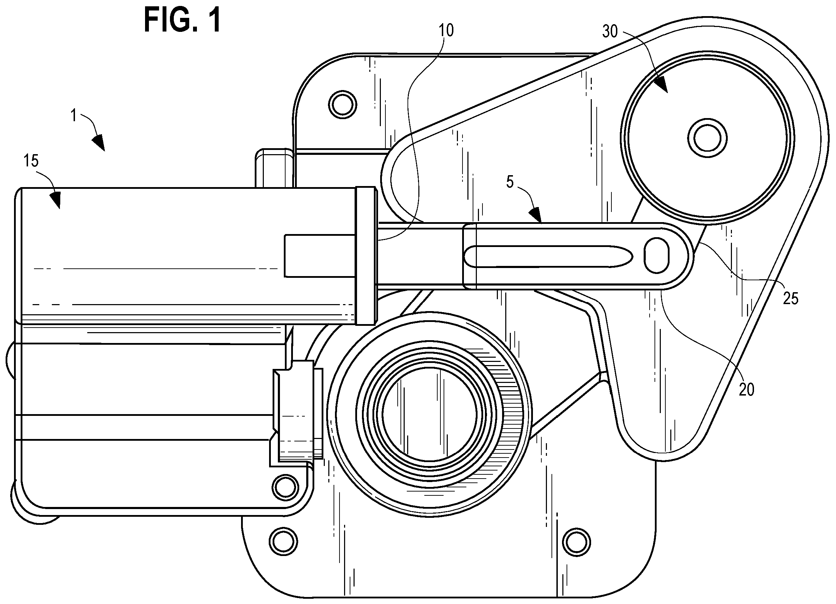

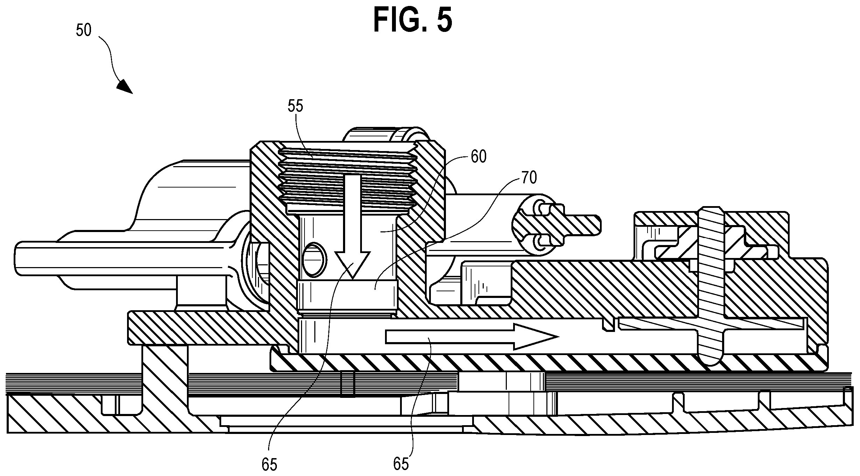

Turning first to Fig. 1, a diverter 1 may be designed as a "hydraulic piston," and the diverter 1 may take different positions to alter the spray modes. The diverter 1 may be positioned within, outside of, or in any other configuration on a showerhead or other faucet (e.g., showerhead 50 of Fig. 5) (collectively referred to herein as a showerhead). Such positioning may be selected depending on different configurations of the showerhead and may be designed in any suitable manner.

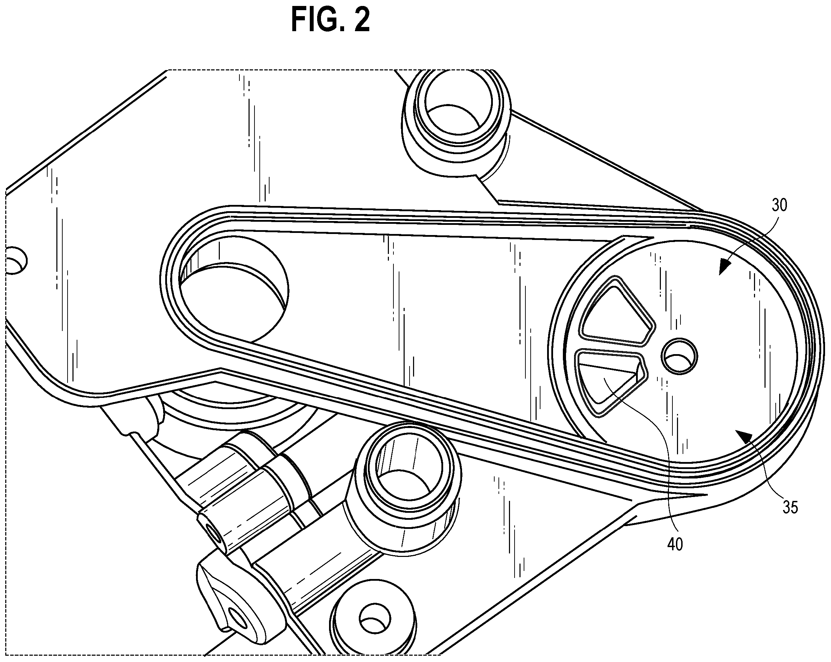

The diverter 1 may include a piston 5 which may be attached at a first end 10 to a piston activator 15. The piston activator 15 may cause the piston 5 to extend as desired. A second end 20 of the piston 5 may be attached or coupled to a rotation arm 25, which may be attached or coupled to a port selection disk 30. Movement of the piston 5 may cause rotation or movement of the rotation arm 25, which may cause rotation or movement of the port selection disk 30. Such rotation may be activated by a rotary valve or in any suitable manner. As illustrated in Fig. 1, the piston 5 may be in a first position. In the first position, the port selection disk 30 may be open, at least partially, to a first waterway of an outlet of the showerhead. As illustrated in Fig. 2, an underside 35 of the port selection disk 30 may include a first port outlet 40, which may be a cutout that directs water to a particular location. The first port outlet 40 may be aligned with the first waterway of the outlet of the showerhead and may cause water to flow toward exit outlets via the first waterway.

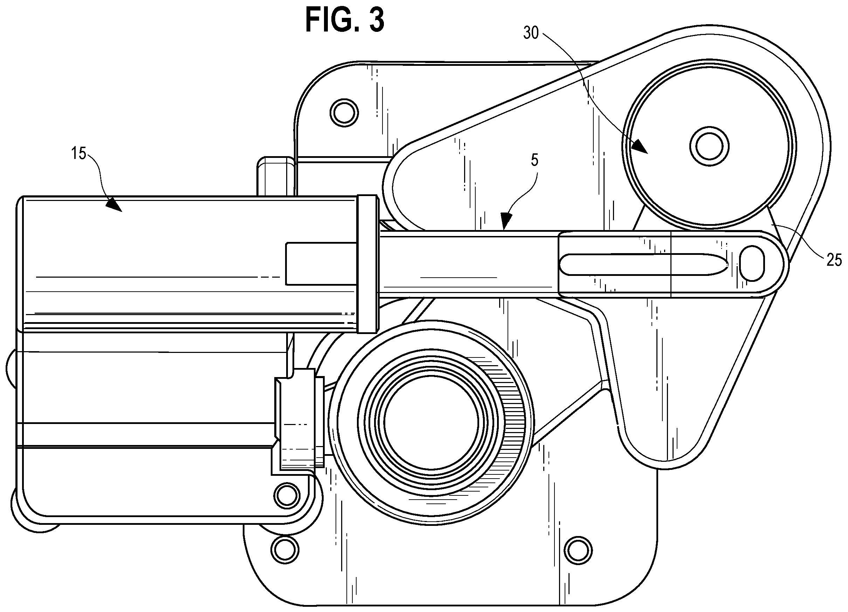

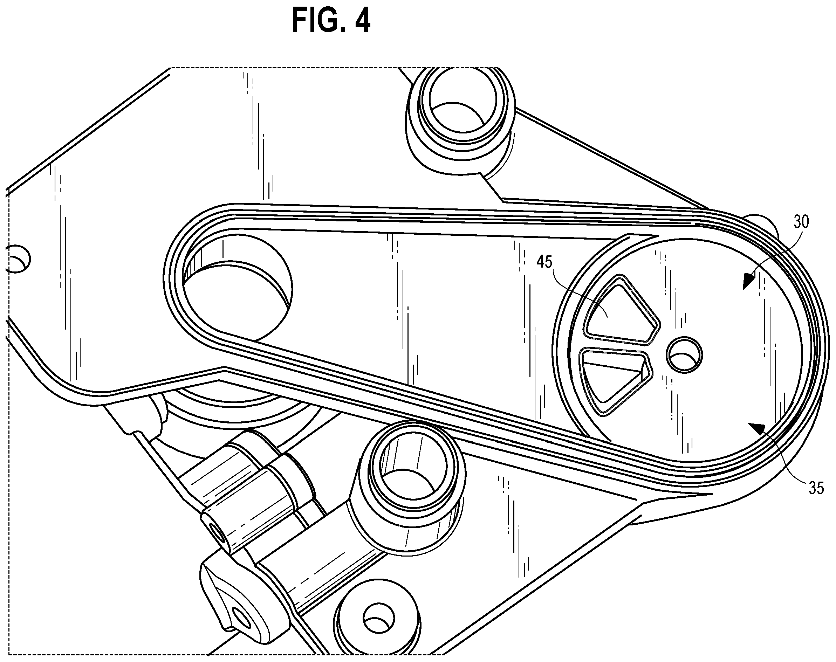

Turning to Fig. 3, the piston activator 15 may cause the piston 5 to extend in a direction toward the port selection disk 30, causing the rotation arm 25 to rotate the port selection disk 30. This extended position may correlate to a second position. In the second position, the port selection disk 30 may be open, at least partially, to a second waterway of the outlet of the showerhead. In such a configuration, as illustrated in Fig. 4, a second port outlet 45 on the underside 35 of the port selection disk 30, which may be a cutout that directs water to a particular location, may be aligned with the second waterway of the outlet of the showerhead. This may cause water to flow toward the outlet via the second waterway. The first port outlet 40 and second port outlet 45 may be partially opened at one time, and both, one, or none may be closed and/or opened to an associated waterway.

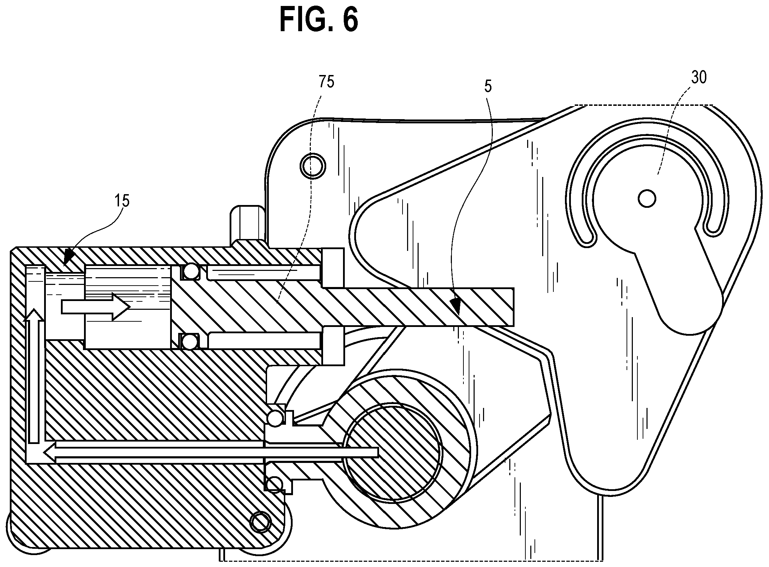

Turning now to Fig. 5, water may enter a showerhead 50 via an inlet 55. The inlet 55 may be any suitable inlet and may be attached or coupled to a main water line, for example. Water may travel into a piston waterway 60 (water may flow through the piston waterway 60 in the direction illustrated by arrows 65) of the showerhead 50 and may pass through a flow regulator 70. The flow regulator 70 may be any suitable flow regulator and may be used to control the flow of water through the showerhead 50. The flow regulator 70 may set a flow rate of water flowing in the piston waterway 60. As one example, the flow regulator 70 may be a rubber O-ring that may deform based on water pressure and may have a net effect of maintaining a flow rate. The flow regulator 70 may assist in maintaining a constant flow of water even with varying water pressures. The flow of water through the piston waterway 60 may cause the piston 5, as illustrated in Fig. 6, to extend.

Extension of the piston 5 may be regulated via a return spring 75 incorporated within the piston activator 15. The return spring 75 may bias the piston 5 (via the piston activator 15) to remain in a first position. When pressure is increased, the piston activator 15 may overcome the force of the return spring 75, and the piston 5 may become "energized." Energizing of the piston 5 may cause rotation of the port selection disk 30 via extension of the piston 5. The piston 5 may alternatively or additionally be "energized" by a user. A user may, for example, turn a dial, slide a button, etc. in order to cause extension of the piston 5. The selection by a user may alter a flow and/or pressure of water in order to cause the piston 5 to extend.

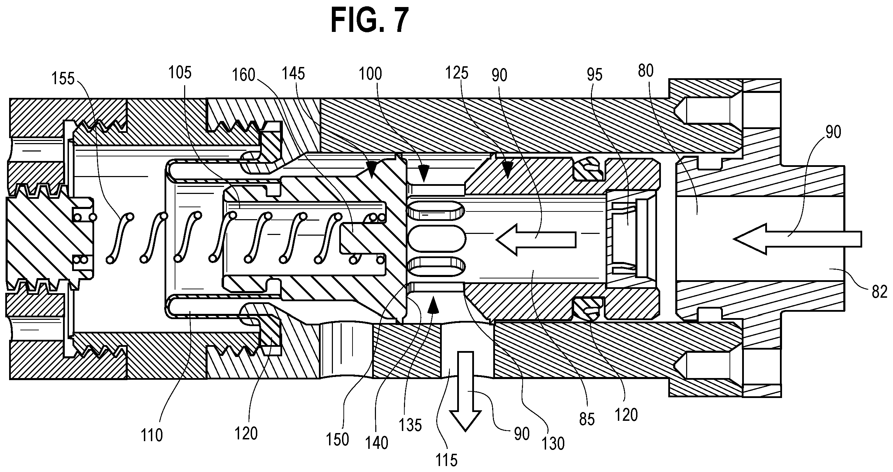

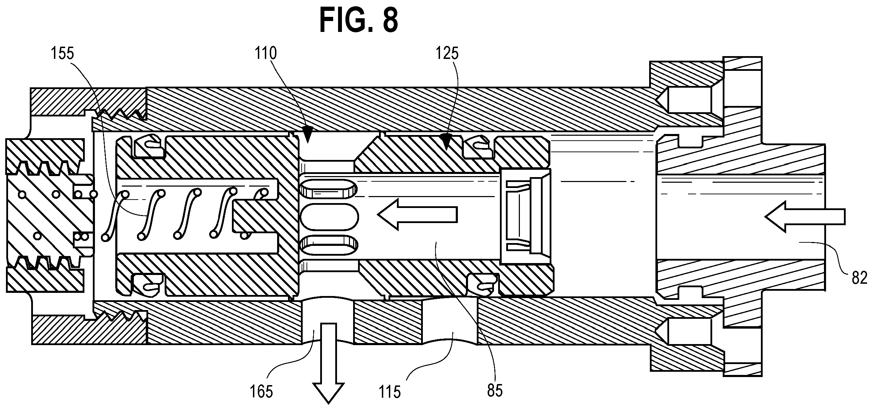

The piston 5 and other associated components may be configured and designed as discussed and illustrated above and/or may be configured and designed in a manner as illustrated in Figs. 7 and 8. Turning first to Fig. 7, water may flow into a piston waterway 80 of a showerhead (e.g., showerhead 50 of Fig. 5) via an inlet 82. Water may flow through the piston waterway 80 in the direction illustrated by arrows 90. Water may pass through a flow regulator 95. The flow regulator 95 may be any suitable flow regulator and may be used to control the flow of water through the showerhead. The flow regulator 95 may set a flow rate of water flowing in the piston waterway 80. As one example, the flow regulator 95 may be a rubber O-ring that may deform based on water pressure and may have a net effect of maintaining a flow rate. The flow regulator 95 may assist in maintaining a constant flow of water even with varying water pressures. The flow of water through the piston waterway 80 may cause a piston 100 to extend. A base 105 of the piston 100 may be connected to or integrally formed with a diaphragm valve 110 which may be used to reduce friction created by movement of the piston 100.

As illustrated in Fig. 7, the piston 100 may be in a first position. In such a position, the piston 100 may be placed in a position within the waterway 85 such that a first outlet 115 is opened. When opened, water may flow out of the waterway 85 via the first outlet 115. Several seals 120 (which may be lip seals, O-rings, diaphragm seals, etc.) may be attached to the piston 100 and may assist in preventing water from flowing to portions that are not desired.

The piston 100 may include a first portion 125 which may be connected to or integrally formed with a first end 130 of a piston connection 135. A second end 140 of the piston connection 135 may be connected or integrally formed with a second portion 145 of the piston 100. The first portion 125 may include a hollow body such that water may flow in and through the first portion 125, and the piston connection 135 may be designed with cutouts which may allow for water to flow around and through the piston connection 135. Water may stop flowing at a front wall 150 of the second portion 145, and the placement of the front wall 150 may cause different outlets to open. The piston 100 may translate laterally in order to cause different outlets to open.

Movement of the piston 100 may be caused by expansion or retraction of a return spring 155 based on water pressure and flow within the waterway 85. The piston 100 may be biased to remain in a first position by the return spring 155, which may be attached to a spring connection portion 160 within the second portion 145. The return spring 155 may retract to a second position, as illustrated in Fig. 8, when water flow and/or pressure increases in the waterway 85. Such increased flow and/or pressure may cause the piston 100 to translate laterally, such that the water may exit via the second outlet 165. The first outlet 115 may be covered by the first portion 125 of the piston 100 such that water may or may not flow out of the first outlet 115. When pressure is increased, the piston 100 may overcome the force of the return spring 155, and the piston 100 may become "energized," as illustrated in Fig. 8.

Energizing of the piston 100 may cause translation of the piston 100 which may cause different outlets to open and/or close. The piston 100 may alternatively or additionally be "energized" by a user. A user may, for example, turn a dial, slide a button, etc. in order to cause the piston 100 to translate within the waterway 85. The selection by a user may alter a flow and/or pressure of water in order to cause the piston 100 to translate.

When the flow rate is equal to or below the rate of the flow regulator 95, then there may or may not be additional pressure or force on the piston 100. As the flow rate increases above the limit of the flow regulator 95, the pressure or force may increase on a side of the piston 100 closest to the inlet 85. Once this pressure or force is greater than the pressure or force of the return spring 155, the piston 100 may move to translate to and from the first outlet 115 and second outlet 165. When the pressure or force reduces, the return spring 155 may cause the piston 100 to move to its original position.

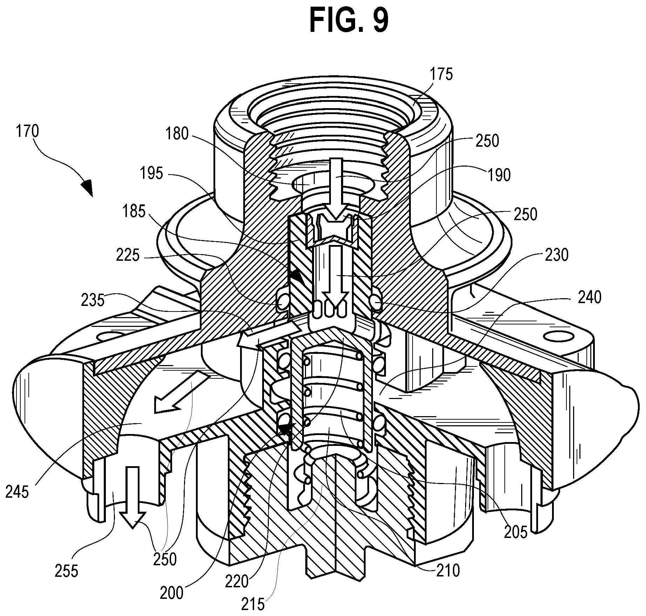

Turning now to Fig. 9, a diverter 170 may be designed as a "hydraulic shuttle," and the diverter 170 may take different positions to alter the spray modes. The diverter 170 may be positioned within, outside of, or in any other configuration on a showerhead. Such positioning may be selected depending on different configurations of the showerhead and may be designed in any suitable manner.

Water may enter to reach the diverter 170 via an inlet 175 (which may be any suitable inlet and may be attached or coupled to a main water line, for example) and may travel through a shuttle waterway 180. The diverter 170 may include a shuttle 185, which may translate within the shuttle waterway 180 in order to alter which outlet may be open and/or closed for water to flow. Upon entry through the inlet 175, water may flow into and through a flow regulator 190. The flow regulator 190 may be any suitable flow regulator and may be used to control the flow of water through the showerhead. The flow regulator 190 may set a flow rate of water flowing in the shuttle waterway 180. As one example, the flow regulator 190 may be a rubber O-ring that may deform based on water pressure and may have a net effect of maintaining a flow rate. The flow regulator 190 may assist in maintaining a constant flow of water even with varying water pressures.

After passing through the flow regulator 190, the water may enter the shuttle 185, and the shuttle waterway 180 may extend into and through the shuttle 185. The shuttle 185 may include a first portion 195, which may be hollow such that water may flow into and through the first portion 195. The first portion 195 may be attached to or integrally formed with a second portion 200, which may house a return spring 205. The return spring 205 may be placed within a body 210 of the second portion 200 and may be attached at its base to a spring connection portion 215. The return spring 205 may be formed around and/or held in place by the spring connection portion 215. Depending on the pressure and/or flow of water passing through the flow regulator 190 to the first portion 195, the return spring 205 may expand or retract, causing the shuttle 185 to translate linearly to alter which outlet is open.

The first portion 195 and second portion 200 may include a wall 220 therebetween, such that water flowing into the first portion 195 does not flow into the second portion 200. Several lip seals 225 may be attached to the shuttle 185 and may assist in preventing water from flowing to portions that are not desired. The seals 225 (which may be lip seals, O-rings, diaphragm seals, etc.) may be placed within seal divots 230 within the diverter 170.

The first portion 195 may include a first port 235 and a second port 240, each of which may align with an outlet. As illustrated in Fig. 9, the first port 235 aligns with a first outlet waterway 245, and water may flow in the path illustrated by arrows 250. This configuration may be a first position of the shuttle 185, and the return spring 205 may be in an "expanded" state when in the first position. The water may exit the diverter 170 (and be directed into the showerhead, for example) via a first outlet 255 coupled to the first outlet waterway 245. In such a configuration, approximately 100% of the water flowing into the shuttle waterway 180 may flow out via the first outlet 255.

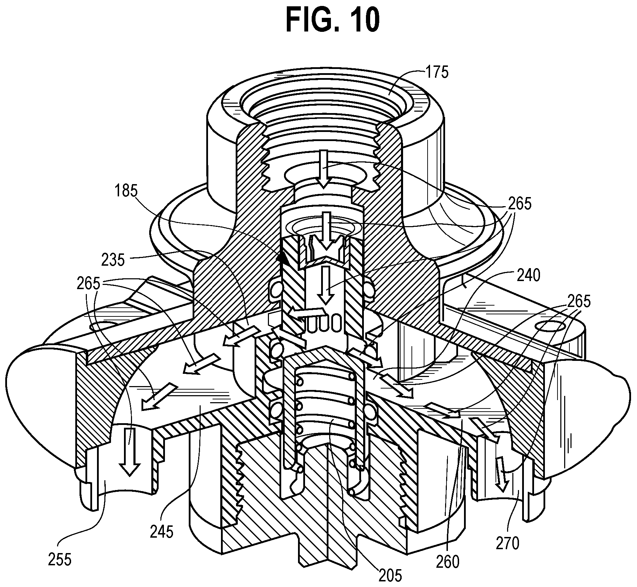

Turning to Fig. 10, the pressure and/or flow of water entering the inlet 175 may cause the return spring 205 to retract to a second position. The pressure and/or flow change may be an increase in back pressure, which may result in more force acting against the return spring 205, causing the shuttle 185 to translate. This increase in back pressure may be increased by reducing restriction in prior valves leading up to the inlet 175. When in the second position, the shuttle 185 may translate linearly in a downward direction. In such a configuration, the first port 235 may align (at least partially) with the first outlet waterway 245, and a second port 240 may align (at least partially) with a second outlet waterway 260. Water may flow in the direction of arrows 265 and may flow out of the first outlet 255 and a second outlet 270 (which may be coupled to the second outlet waterway 260). In such a configuration, approximately 50% of the water flowing into the shuttle waterway 180 may flow out via the first outlet 255 and approximately 50% of the water flowing into the shuttle waterway 180 may flow out via the second outlet 270.

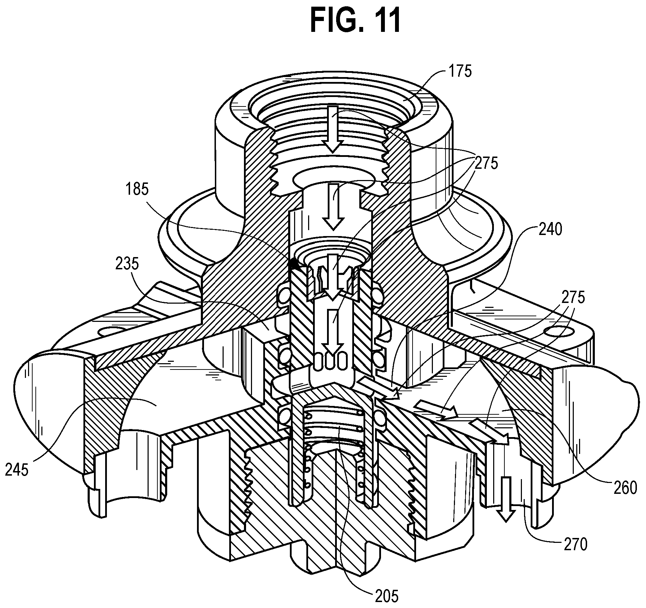

As illustrated in Fig. 11, the pressure and/or flow of water entering the inlet 175 may cause the return spring 205 to retract to a third position (which may be further retracted than in the second position). The pressure and/or flow change may be an increase in back pressure, which may result in more force acting against the return spring 205, causing the shuttle 185 to translate. This increase in back pressure may be increased by reducing restriction in prior valves leading up to the inlet 175. When in the third position, the shuttle 185 may translate linearly in a downward direction (which may be further downward than in the third position). In such a configuration, the first port 235 may be closed off from the first outlet waterway 245, and the second port 240 may align (at least partially) with the second outlet waterway 260. Water may flow in the direction of arrows 275 and may flow out of the second outlet 270 coupled to the second outlet waterway 260. In such a configuration, approximately 100% of the water flowing into the shuttle waterway 180 may flow out via the second outlet 270. Any number of outlets may be used, and as one example, the outlets may be activated in sequence depending on the placement of the shuttle 185.

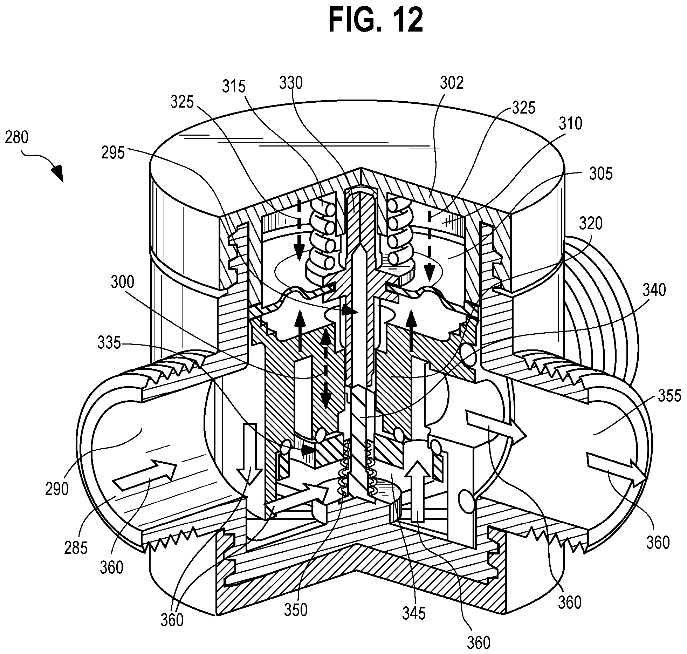

Turning now to Fig. 12, a diverter 280 may be designed as a "diaphragm cam," and the diverter 280 may take different positions to alter the spray modes. The diverter 280 may be positioned within, outside of, or in any other configuration on a showerhead. Such positioning may be selected depending on different configurations of the showerhead and may be designed in any suitable manner.

The diverter 280 may include an inlet 285, which may be any suitable inlet and may be attached or coupled to a main water line, for example. Water may travel into the diverter 280 via the inlet 285 and may travel through a diaphragm waterway 290. The diverter 280 may include several seals (which may be lip seals, O-rings, diaphragm seals, etc.) to prevent water from accessing areas that are not desired. The water may cause actuation of a cam mechanism 295. The cam mechanism 295 may actuate in a direction illustrated by arrow 300. Such actuation may convert linear movement into rotary movement. Actuation may be caused by pressure of water flowing through the diaphragm waterway 290.

In a space between an upper wall 302 and a diaphragm 305 (hereinafter referred to as pocket 310), there may be approximately no water pressure. The pocket 310 may or may not contain water, and the pocket 310 may be connected to the atmosphere. Such a configuration may enable a displacement of the diaphragm 305 when water pressure increases. The pocket 310 may also house an actuation spring 315, which may expand or retract based on pressure inside a body 320 of the diverter 280. The actuation spring 315 may cause movement of the diaphragm 305 in a direction illustrated by arrows 325. The actuation spring 315 may be attached or otherwise connected to an upper portion 330 of a cam mechanism 295. The upper portion 330 of the cam mechanism 295 may hold (via attachment, connection, or being formed with) the diaphragm 305. The upper portion 330 of the cam mechanism 295 may be attached or connected to a diverter plate 335 via a cam attachment arm 340. Expansion or retraction of the actuation spring 315 may cause the diverter plate 335 to be sealed to control which outlets of the diverter 280 are used. The diverter plate 335 may rotate within a rotation portion 345 of the diverter 280, and the diverter plate 335 may include a hole or several holes which may cause water to flow in different directions.

The diverter plate 335 may be connected or attached to a return spring 350. The return spring 350 may bias the diverter plate 335 to a first position. The pressure within the body 320 of the diverter 280 and the return spring 350 may energize the diaphragm and may be sufficient to compress the actuation spring 315. This may, in turn, seal the diverter plate 335. When the pressure within the body 320 of the diverter 280 has a dip (even momentarily), which may be controlled upstream, the actuation spring 315 may have sufficient force to cause actuation of the cam mechanism 295. This may cause rotation of the diverter plate 335. When the pressure is reinstated to its previous level, the diaphragm 305 may be pressurized and may compress or retract the actuation spring 315. This may cause the cam mechanism 295 to raise in an upward direction, which may alter which outlet is used.

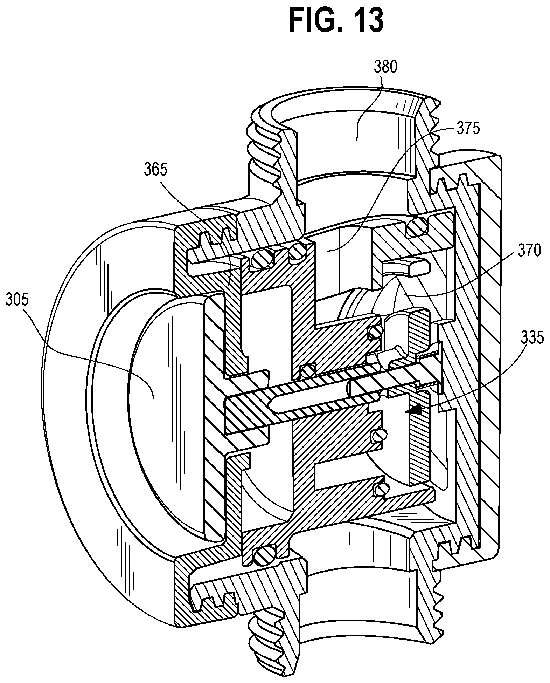

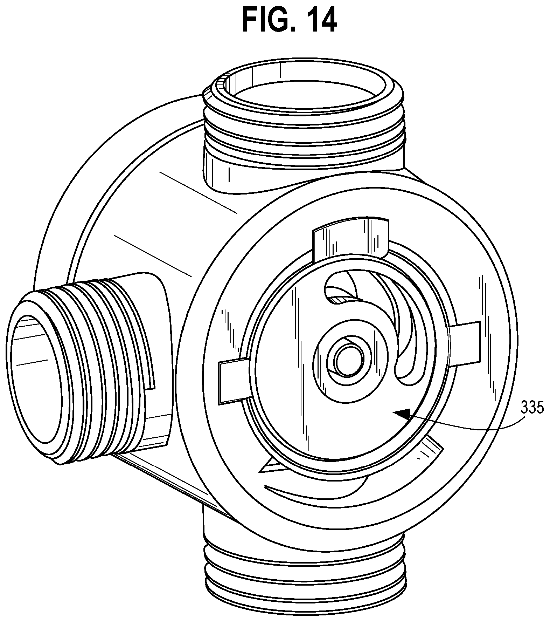

As illustrated in Fig. 12, water may flow through the diaphragm waterway 290, travel under the diverter plate 335, and exit via a first outlet 355. The water may travel in the direction illustrated by arrows 360. As illustrated in Fig. 13, water may flow in a similar way to Fig. 12. The diaphragm 305 may abut a diaphragm wall 365, and the diverter plate 335 may be rotated such that a hole 370 is open to water flow. As such, water enters via the inlet 285 (not illustrated in fig. 13) and may travel into and through the hole 370. After passing through the hole 370, water may flow through a first port 375 and out of the diverter 280 via the first outlet 380. The diverter may be oriented in any particular manner, including in a linear or lateral direction. Turning lastly to Fig. 14, the diverter plate 335 may be rotated in a manner as illustrated such that water travels to a desired outlet. As one example, the configuration illustrated in Fig. 13 may correlate to the configuration illustrated in Fig. 12. The diverter plate 335 may be rotated such that multiple outlets may be used at once and water may through several outlets. Any number of outlets may be used, and as one example, the outlets may be activated in sequence depending on the placement of the cam mechanism 295.

Although discussed with reference a particular number of outlets and/or inlets, the showerheads and diverters (and all associated components) as described herein may be coupled to any number of outlets and/or inlets. The selection of different outlets and/or inlets may be chosen based on a particular design or configuration desired by a user. Further, water exiting via outlets as described herein may be fed into showerheads with varying spray characteristics. As such, varying outlet usage and spray characteristics may be combined to develop a unique user experience. The diverter (via the piston, shuttle, or diaphragm) may alternatively or additionally be "energized" by a user. A user may, for example, turn a dial, slide a button, etc. in order to extend, translate, rotate, adjust, etc. the positioning of the components in the diverter. The selection by a user may alter a flow and/or pressure of water in order to cause the components in the diverter to extend, translate, rotate, adjust, etc. The return springs as described herein may be programmed such that a particular force and/or pressure may cause expansion or retraction of the return springs.

The present disclosure is disclosed in the context of faucets and shower systems but not limited to faucets and shower systems. Aspects of the present disclosure that are depicted in the illustrated embodiments or otherwise described herein may be used in conjunction with other ablutionary fittings or water distribution systems. Water distribution systems encompassed by the present disclosure include, without limitation, water distribution systems that dispense water for consumption and/or washing and water distribution systems used for private, public, domestic, residential, commercial, and/or industrial use. Water distribution systems such as, for example and without limitation, showers, baths, washtubs, hot tubs, sinks, fountains, water dispensers, and the like may incorporate aspects of the present disclosure and are encompassed herein. Example water distribution systems may include an outlet dispensing water or other fluid. The outlet may include any suitable device that is configured to dispense liquid or water. The outlet may include an ablutionary fitting, such as, for example and without limitation, a showerhead, shower spray, wand hand shower, faucet, wand, spigot, tap, spout, or the like. The outlet can include a single outlet or more than one outlet. Where the outlet includes multiple, e.g., two or more outlets, the outlets can be similar types of outlets or dissimilar types of outlets. Elements and features described with reference to one illustrated embodiment are not limited to that embodiment only; the features and elements of any one or more of the illustrated embodiments can be utilized in any other embodiment in any combination.

As is evident from the foregoing description, certain aspects of the present invention are not limited by the particular details of the examples illustrated herein, and it is therefore contemplated that other modifications, applications, variations, or equivalents thereof, will occur to those skilled in the art. Many such changes, modifications, variations, and other uses and applications of the present constructions will, however, become apparent to those skilled in the art after considering the specification and the accompanying drawings. In addition, unless mention was made above to the contrary, it should be noted that all of the accompanying drawings are not to scale. All such changes, modifications, variations, and other uses and applications which do not depart from the spirit and scope of the present inventions are deemed to be covered by the inventions which are limited only by the claims which follow.

## Claims

1. A diverter for providing at least one spray mode via a shower system, the diverter comprising:
an inlet for receiving water;
a piston connected to a rotatable plate comprising a plurality of ports; and
a piston activator, which, when a pressure of the water flowing through the diverter reaches a certain level, the piston activator causes the piston to extend, causing the rotatable plate to rotate and open at least one of the plurality of ports.

2. The diverter of claim 1, wherein, when the piston is in a first position, a first port of the at least one of the plurality of ports is at least partially open and a second port of the at least one of the plurality of ports is closed, and wherein, when the piston is in a second position, the first port is closed and the second port is at least partially open.

3. The diverter of claim 2, wherein the first port at least partially aligns with a first outlet waterway, and the second port at least partially aligns with a second outlet waterway.

4. The diverter of claim 2 or claim 3, wherein the first position provides a first spray mode of the at least one spray mode, wherein the second position provides a second spray mode of the at least one spray mode, and wherein the first spray mode is different from the second spray mode.

5. The diverter of any one of the preceding claims, further comprising a return spring biasing the piston toward a first position.

6. The diverter of claim 5, wherein the return spring is programmable to expand at a first predetermined water pressure, and wherein the return spring is programmable to retract at a second predetermined water pressure.

7. The diverter of any one of the preceding claims, further comprising a flow regulator for maintaining a flow of the water at a set flow rate and/or wherein the piston activator is actuated manually by a user via a dial or button.

8. A diverter for providing at least one spray mode via a shower system, the diverter comprising:
an inlet for receiving water;
a plurality of outlet waterways; and
a shuttle for translating within a shuttle waterway, the shuttle comprising:
a return spring biasing the shuttle toward a first position;
a plurality of ports, each coupled to one of the plurality of outlet waterways; and
wherein when a pressure of the water flowing to the shuttle reduces to a first level, the return spring causes the shuttle to translate, causing at least one of the plurality of ports to open; and
wherein when the pressure of the water flowing to the shuttle increases from the first level to a second level, the shuttle overcomes a force of the return spring, causing the shuttle to translate and causing at least one of the plurality of ports to open.

9. The diverter of claim 8, further comprising a flow regulator for maintaining a flow of the water at a set flow rate, optionally wherein the flow regulator is a rubber O-ring.

10. The diverter of claim 8 or claim 9, wherein the shuttle includes a first portion and a second portion separated via at least one lip seal, wherein water flows into and through the first portion, optionally wherein the first portion includes a first port and a second port, wherein the first port at least partially aligns with a first outlet waterway of the plurality of outlet waterways, and the second port at least partially aligns with a second outlet waterway of the plurality of outlet waterways.

11. The diverter of claim 8, claim 9 or claim 10, wherein, when the shuttle is in the first position, a first port of the plurality of ports is at least partially open and a second port of the plurality of ports is closed, and wherein, when the shuttle is in a second position, the first port is closed and the second port is at least partially open, optionally: wherein the first position provides a first spray mode of the at least one spray mode, wherein the second position provides a second spray mode of the at least one spray mode, and wherein the first spray mode is different from the second spray mode.

12. The diverter of any one of claims 8 to 11, wherein when the pressure of the water flowing to the shuttle is at a third level between the first level and the second level, translation of the shuttle causes at least two of the plurality of ports to be at least partially open.

13. A diverter comprising:
an inlet for receiving water;
a cam mechanism connected at a first end to a diaphragm and at a second end to a diverter plate, wherein an actuation spring coupled to the cam mechanism causes linear movement of the cam mechanism;
a plurality of ports coupled with the cam mechanism;
wherein the diverter plate comprises at least one hole for water to flow through the diverter plate;
wherein when there is at least one of a dip in pressure or increase in pressure within the diverter, the actuation spring causes the cam mechanism to adjust, causing the diverter plate to rotate; and
wherein when the diverter plate is rotated, the at least one hole of the diverter plate aligns, at least partially, with at least one of the plurality of ports, and the water flows into and through the at least one of the plurality of ports.

14. The diverter of claim 13, wherein the linear movement caused by actuation of the cam mechanism is converted to rotary movement of the diverter plate.

15. The diverter of claim 13 or claim 14, wherein the actuation spring causes linear movement of the diaphragm, optionally: wherein there is substantially no water pressure in a space between the diaphragm and an upper wall of the diverter, and wherein such substantially no water pressure enables displacement of the diaphragm when water pressure in the diverter increases.
